Europäisches Patentamt

European Patent Office

Office européen des brevets

(19)

(11) Veröffentlichungsnummer : **0 071 083**
B1

(12) **EUROPÄISCHE PATENTSCHRIFT**

(45) Veröffentlichungstag der Patentschrift :
12.11.86

(51) Int. Cl.⁴ : **G 11 B  5/55**, G 11 B 21/02

(21) Anmeldenummer : **82106298.1**

(22) Anmeldetag : **14.07.82**

(54) **Vorrichtung zum Positionieren von Gegenständen geringer Masse.**

(30) Priorität : **24.07.81 DE 3129212**

(43) Veröffentlichungstag der Anmeldung :
**09.02.83 Patentblatt 83/06**

(45) Bekanntmachung des Hinweises auf die Patenterteilung : **12.11.86 Patentblatt 86/46**

(84) Benannte Vertragsstaaten :
**DE FR NL**

(56) Entgegenhaltungen :
**DE-A- 2 948 147**
**FR-A- 2 148 312**
**US-A- 3 521 092**
**US-A- 3 643 242**
**US-A- 4 006 372**

(73) Patentinhaber : **BASF Aktiengesellschaft**
**Carl-Bosch-Strasse 38**
**D-6700 Ludwigshafen (DE)**

(72) Erfinder : **Manzke, Klaus**
**Schulstrasse 10**
**D-6721 Westheim (DE)**
Erfinder : **Grittmann, Ernst-Juergen**
**Werderstrasse 35A**
**D-6700 Ludwigshafen (DE)**
Erfinder : **Koch, Volker, Dr.**
**Am Hipperling 3**
**D-6719 Battenberg (DE)**

**Beschreibung**

Die vorliegende Erfindung betrifft eine Vorrichtung zum Positionieren von Gegenständen geringer Masse, insbesondere von Magnetköpfen auf ausgewählte Magnetspuren von mindestens einer mit einem Antrieb kuppelbaren Magnetplatte in einem Magnetplattenspeicher, mit einer in Richtung zur Magnetplattenachse verschiebbaren Magnetkopfeinheit mit mindestens einem Magnetkopf, die über einen Antriebsmotor und eine Kraftübertragungseinrichtung mittels Führungsrollen relativ zum Gerätechassis längsverschieblich gelagert ist, wobei die Führungsrollen die ebenen Längsränder einer Führungsplatte umgreifen.

Eine solche Positioniervorrichtung ist für jedes Signalspeichersystem, bei dem die Signale mit großer Packungsdichte auf einer Speicherfläche z. B. magnetisch, elektrisch oder optisch gespeichert sind, vorteilhaft verwendbar.

Bei einem bekannten Magnetbandspeichergerät wird ein plattenförmiger Schlitten bewegt (US-PS-3 921 933). Im Gerätechassis sind zwei Rundstangen angebracht, welche über V-förmig geschliffene Wälzkörper die Führung der Schlittenplatte übernehmen. Die Wälzkörper sind starr an der Schlittenplatte befestigt und müssen als Masse mitbewegt werden. Nachteile der bekannten Vorrichtung liegen darin, daß die Rundstangen mit den V-förmig geschliffenen Wälzkörpern Punktberührung haben, die infolge der damit verbundenen hohen Flächenpressung schon nach kurzem Dauerbetrieb zu Materialverschleiß führt. Dadurch können Metallpartikel in den Datenspeicherbereich gelangen, welche dort zu Funktionsstörungen führen können. Ferner ist von Nachteil, daß zur Erlangung einer Spielfreiheit der Führungselemente die V-förmig geschliffenen Wälzkörper in axialer Richtung verspannt werden müssen, gerade in der Richtung, in der sie eine geringe Tragfähigkeit aufweisen. Genau um dieses Axialspiel würde die Höhenlage der Schlittenplatte für eine darauf transportierte Magnetkopfeinheit ungenau.

Ferner ist aus der Patentschrift US-4 161 004 eine Vorrichtung bekannt, bei der mittels eines durch einen Motor angetriebenen Spulrades sowie eines um das Spulrad geschlungenen elastischen Antriebsbandes ein Führungsteil mit den Magnetköpfen bewegt wird. Dieses Führungsteil ist mittels Gleitlagerbuchsen auf einer Führungsstange geführt. Bedingt durch die Gleitlager tritt im Betrieb eine Gleitreibung auf, die zu Materialabrieb führt. Dieser Materialabrieb macht aus den oben bereits genannten Gründen auch den Einsatz dieser Konstruktion bei einem Plattenspeicher, insbesondere mit fliegenden Magnetköpfen unmöglich.

Aus der Patentschrift US-3 521 092 war außerdem ein Linearmotor bekannt, bei dem eine unsymmetrische Fünf-Rollen-Kombination für die Lagerung einer mittels eines Linearmotors bewegten Kopftragplatte auf einer Chassisplatte in einem Magnetplattenspeichergerät verwendet wurde. Von den fünf Rollen an der Kopftragplatte sind drei der ebenen Oberfläche der Chassisplatte zugeordnet und zwei Rollen wirken nachgiebig federnd mit jeweils einer der schrägstehenden Seitenflächen der Chassisplatte zusammen. Somit bewegt sich die Kopftragplatte oberhalb der Rollenlager. Die untergreifenden Führungsrollen sind lediglich in einer Schrägebene zur Ebene der Chassisplatte, also sehr beschränkt, beweglich angeordnet.

Der Kraftvektor greift zwar in Verschieberichtung der Kopftragplatte an letzterer an, jedoch im vertikalen Abstand von ihrer Oberfläche, wobei der Kraftangriffsvektor etwa in der Mitte der Zylinderantriebsspule liegt und auch vor allem im Abstand hinter den Rollenlagern an der Kopftragplatte angreift.

Damit sind in Bezug auf Kippmomente denkbar ungünstige Verhältnisse gegeben, wenn vom Linearmotorantriebsprinzip, bei dem eine genaue Führung der Zylinderspule sichergestellt ist, abgegangen wird, da durch den großen Abstand des Kraftangriffsvektors von den einzelnen Lagern hohe Kippmomente auftreten können. Die bekannte unsymmetrische Anordnung der Rollen in Bezug auf die Breite der Kopfträgerplatte ist ebenfalls nur wegen der Zwangsführungswirkung des Linearmotors benutzbar.

Mit einem Antriebssystem vorliegender Erfindung, bestehend aus einem Rotationsmotor und einer Kraftübertragungseinrichtung, ist die bekannte Führungsrollenanordnung nicht einsetzbar wegen mangelnder Zentrierungsgenauigkeit, erheblicher Kippgefahr der Führungsplatte (denn die angefederten Rollen dienen lediglich der Kontakthaltung mit der Platte) und wegen der Schwingungsgefahr der Köpfe.

Es war daher Aufgabe der vorliegenden Erfindung, eine Vorrichtung der eingangs genannten Art zu schaffen, bei der die Führungsplatte für die Magnetköpfe auch bei hohen Verschiebungsbeschleunigungen leichtgängig und präzise geführt bleibt, und der Verschleiß der Führungsplatte gegenüber den bekannten Vorrichtungen entscheidend gemindert wird.

Diese Aufgabe wird erfindungsgemäß dadurch gelöst, daß die Kraftübertragungseinrichtung direkt an der die Magnetkopfeinheit tragenden Führungsplatte angreift, so daß der Kraftvektor im wesentlichen in der Ebene liegt, in der die Führungsplatte verschiebbar gelagert ist, und daß die Führungsplatte in der Höhe und in der Breite zwischen den Führungsrollen geführt gelagert ist, wobei ein Teil der Führungsrollen fest zum Gerätechassis angeordnet ist und der andere Teil der Führungsrollen um zwei Raumachsen drehbeweglich nachgiebig angeordnet ist, wovon eine Achse parallel zur Verschieberichtung der Führungsplatte und die andere senkrecht zur Verschieberichtung und quer zur Führungsplatte verläuft.

Vorteile der erfindungsgemäßen Lösung ergeben sich besonders augenscheinlich durch die Kompensationsmöglichkeit einer Vielzahl von Toleranzen des Antriebsmotors, des Chassis, der Speicherplatte usw., schon beim Zusammenbau. Durch die erfindungsgemäße Festlegung des Kraftvektors ergibt sich als Vorteil eine optimale Energieausnutzung.

Eine Weiterbildung der erfindungsgemäße Lösung ist konstruktiv gegeben, wenn der Antriebsmotor mit einem Spulrad versehen ist, an dem ein andererseits mit der Führungsplatte verbundenes Antriebsband befestigt ist, und das Spulrad gleichzeitig als stationäre Führungsrolle zur Lagerung der Führungsplatte vorgesehen ist.

Dadurch ist eine sehr einfache, wirtschaftlich herzustellende und montierbare Vorrichtung gegeben, die sich praktisch durch hohe Positioniergenauigkeit auch bei hohen Spurdichten auszeichnet.

In weiterer Ausbildung sind die Führungsrollen im wesentlichen als Wälzlager ausgebildet, die mit den ebenen Führungsflächen der Führungsplatte in Linienkontakt stehen.

In zweckmäßiger Ausbildung sind zwei stationär angeordnete Führungsrollenpaare mit Abstand zueinander vorgesehen, und mittig dazwischen ist ein um zwei Raumachsen drehbeweglich nachgiebig angeordnetes Führungsrollenpaar angebracht. Damit ergibt sich vorteilhaft eine Dreiachsenlagerung entlang der Längsachse der Führungsplatte.

Praktisch stehen die stationär angeordneten Wälzlagerpaare mit zur Ebene der Führungsplatte im Schrägungswinkel, von insbesondere 45°, liegenden Führungsflächen in Kontakt und die um zwei Raumachsen drehbeweglich nachgiebig angeordneten Wälzlager stehen mit horizontalen Führungsflächen in Kontakt.

Um die Lebensdauer üblicher Bauteile noch weiter zu erhöhen, können die ebenen Führungsflächen entlang den Längsrändern der Führungsplatte mit verschleißarmen Oberflächen ausgebildet sein.

In weiterer praktisch günstiger Ausführung können die um zwei Raumachsen drehbeweglich nachgiebig angeordneten Wälzlager auf einem Lagerbügel befestigt sein, der relativ zum Gerätechassis in den beiden genannten Raumrichtungen drehbeweglich nachgiebig gelagert ist.

Damit ergibt sich eine sehr einfache Herstellung des Lagerbügels als Spritzgußteil und eine sehr einfache Montage, was auch im wesentlichen für die Ausbildung der weiteren Einzelteile der erfindungsgemäßen Vorrichtung gilt.

In günstiger Ausgestaltung der Vorrichtung ist das nachgiebig bewegliche Führungsrollen- bzw. Wälzrollenpaar mittels eines Federblechs drehbeweglich gelagert.

In weiterer wirtschaftlicher Ausbildung werden die für die drehbewegliche Lagerung des mittigen Wälzlagerpaars erforderlichen beiden Drehfreiheitsgrade mittels eines in der Mitte des Federblechs in Verschieberichtung angebrachten Stiftes und V-förmiger Laschen einerseits und der allein möglichen Schwenkbewegung des Federblechs andererseits realisiert.

In weiterer Verbesserung der Lagerung der Führungsplatte ist das um zwei Raumachsen drehbeweglich gelagerte Rollenpaar an einem drehbeweglich gelagerten Lagerbügel angebracht, wobei die Spielfreiheit zwischen dem Federblech und dem Lagerbügel mittels angefederter Laschen und dem in die V-förmigen Laschen mit Vorspannung eingezogenen Stift gewährleistet.

In weiterer zweckmäßiger Ausbildung ist der Lagerbügel zwischen einem Lagerträger für ein stationär angeordnetes Führungsrollenpaar und dem Spulrad mit dem Antriebsband mittig angeordnet und übt über die Wälzkörper des drehbeweglich nachgiebig angeordneten Wälzlagerpaars mittels des vorgespannten Federblechs eine Andruckkraft auf die Führungsplatte aus.

Wenn ein stationäres Führungsrollen- oder Wälzlagerpaar auf einem ortsfesten Lagerträger und das um zwei Raumachsen drehbeweglich nachgiebig angeordnete Rollenpaar auf einem um besagte Raumachsen ebenfalls drebeweglich nachgiebig angeordneten Lagerbügel befestigt ist, sind der Lagerträger, der Lagerbügel und das Federblech zweckmäßig gemeinsam auf einer Montagefläche des Gerätechassis mittels einer einzigen Schraube und zwei Arretierungsstiften positionierbar befestigt.

Mit Hilfe der erfindungsgemäßen Maßnahmen wird erreicht, daß durch eine Wälzlagerung der Führungsplatte, verbunden mit einer Anfederung, eine überraschende Leichtgängigkeit erzielt wird. Ein symmetrischer Aufbau sämtlicher Führungs- und Antriebselemente bezogen auf die Führungsrichtung bewirkt ferner, daß auch bei hohen Verschiebungsbeschleunigungen der Führungsplatte keinerlei schädliche Kippmomente, die zu Verschleißerscheinungen sowie zu ungenauen Magnetkopfpositionierungen führen können, auftreten können. Ferner wird der Teileverschleiß dadurch herabgesetzt, daß durch die erfindungsgemäßen Maßnahmen punktförmige Auflageflächen vermieden werden.

Ausführungsbeispiele der Erfindung werden nachstehend anhand der Zeichnungen näher erläutert. Es zeigen

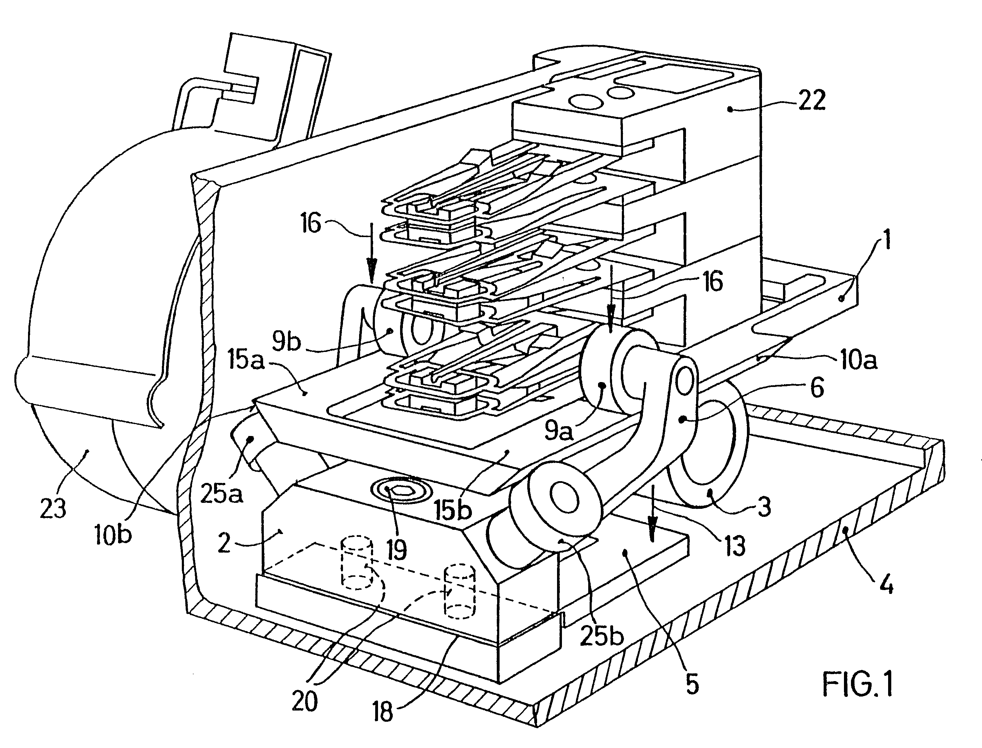

Figur 1 eine perspektivische Darstellung einer Ausführungsform der Erfindung mit dem Gerätechassis im Schnitt,

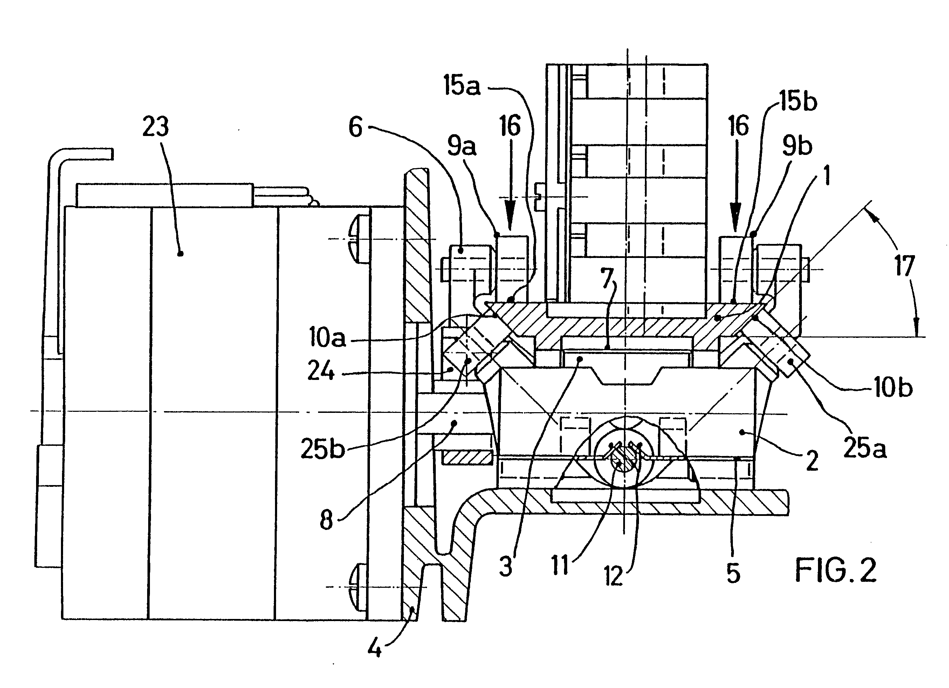

Figur 2 eine Schnittdarstellung der Vorrichtung senkrecht zur Verschieberichtung der Führungsplatte,

Figur 3 eine perspektivische Darstellung eines stationären und eines in zwei Raumachsrichtungen beweglichen Wälzlagerpaares,

Figur 4 eine Darstellung gemäß Figur 3, jedoch mit zwei stationären Wälzlagerpaaren und einem mittigen, in zwei Raumachsrichtungen beweglichen Wälzlagerpaares.

Ein Motor 23, der am Gerätechassis 4 angeflanscht ist, trägt auf seiner Motorwelle 8 ein Spulrad 3, welches mit einem Klemmstück 24 festgeklemmt ist. Um das Spulrad 3 ist ein als Stahlband 7 ausgebildetes Antriebsband geschlungen, dessen beide Enden mit der Führungsplatte 1 für die Magnetkopfeinheit 22 fest verbunden sind. Im Zuge des Stahlbandes, das in Längsrichtung unelastisch ist, ist überraschend vorteilhaft keinerlei Federglied zur Erzeugung einer Vorspannung notwendig, da ein solches die Positionierung ungenauer machen würde. Die Führungsplatte 1 stützt sich einerseits auf dem Umfang des Spulrades 3 als stationäres Führungsrollenlager, andererseits über Wälzlager 25a, 25b auf einem Lagerträger 2 ab, welcher seinerseits am Gerätechassis 4 starr befestigt ist. Die Wälzlager 25a und 25b sind hier ebenfalls stationäre Führungsrollenlager.

Mittig zu dem Spulrad 3 und dem Lagerträger 2 ist ein Lagerbügel 6 angeordnet, der über drehbeweglich nachgiebig angeordnete Wälzlager 9a, 9b auf die oberen Führungsflächen 15a, 15b der Führungsplatte 1 drückt. Diese Druckkraft wird mittels eines vorgespannten Federblechs 5, über das der Lagerbügel 6 mit dem Gerätechassis 4 verbunden ist, auf die Führungsplatte 1 in Richtung 16, also senkrecht auf die Oberfläche der Führungsplatte 1, ausgeübt. Der Lagerbügel 6 ist außerdem zur Führungsebene der Führungsplatte 1 über einen in Laschen 12 des Federblechs 5 drehbar gelagerten Stift 11 so angeordnet, daß über eine Pendelbewegung 13 des Federbleches 5 eine um zwei Raumachsen drehbewegliche nachgiebige Aufhängung des Lagerbügels und damit des beweglichen Rollenpaares erzielt wird. Der Lagerträger 2, das Federblech 5 und der Lagerbügel 6 sind gemeinsam auf der Montagefläche 18 des Gerätechassis 4 mittels nur einer Schraube 19 und zwei Arretierungsstiften 20 positionierbar befestigt. Eine Spielfreiheit zwischen dem Federblech 5 und dem Lagerbügel 6 in Vorschubrichtung der Führungsplatte 1 wird durch federnde Laschen 14 gewährleistet, während Spielfreiheit senkrecht zur Verschieberichtung durch ein kraftschlüssiges Einziehen des Stiftes 11 in die V-förmig angeordneten Laschen 12 des Federblechs 5 erreicht wird.

Die Führungsplatte 1 mit ihren seitlichen Führungsflächen 10a, 10b liegt in einer vorteilhaften Ausführungsform unter einem Schrägungswinkel 17 auf Wälzlagern 25a, 25b des Lagerträgers 2 auf und wird durch diese Lagerführung in ihrer Lage im Gerätechassis 4 bestimmt.

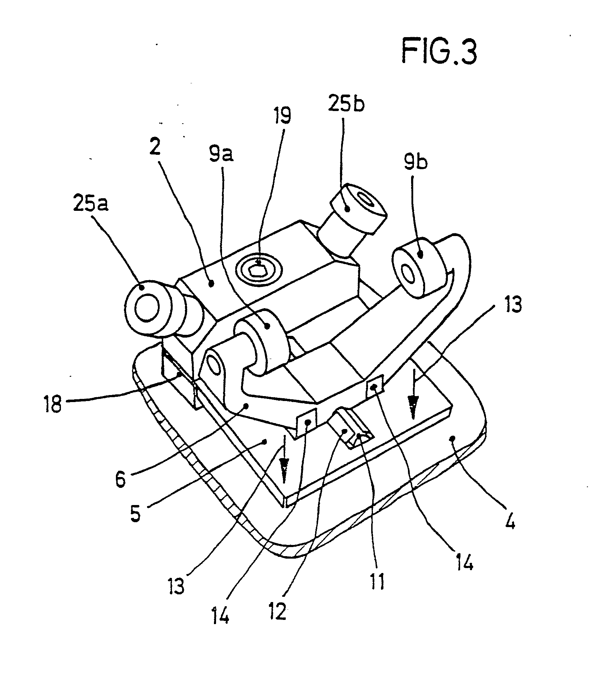

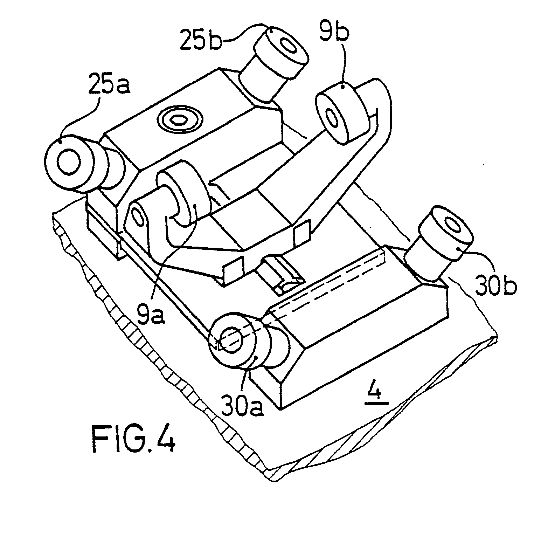

In Figur 4 ist als alternative Lösung eine Ausführung der Führungselemente mit zwei stationären Wälzlagerpaaren 25a und 25b sowie 30a und 30b mit mittig dazwischen angeordnetem, um die zwei Raumachsen drehbeweglich nachgiebig angeordnetem Wälzlagerpaar 9a und 9b dargestellt. Diese Lösung zeigt, daß es nicht unbedingt notwendig ist, einen Bandantrieb mit Spulrad zu verwenden, sondern, daß es mit beliebigem Antriebsorgan z. B. Exzenterantrieb, Zahnstangenantrieb usw. mittels vorliegender Erfindung möglich ist, die Lagerung und Führung der Führungsplatte unabhängig vom jeweiligen Antriebsorgan extrem zu verbessern. Die übrigen Teile in Figur 4 entsprechen denen in Figur 3.

Die Anordnung der beschriebenen Wälzlagerpaare, die praktisch als Rillenkugellager ausgebildet sein können, kann auch prinzipiell umgekehrt sein, die stationären Lager oben und die um zwei Raumachsen drehbeweglichen Lager unten oder aber auch rechts und links, jeweils bezogen auf die Verschieberichtung der Führungsplatte mit den Gegenständen geringer Masse z. B. dem oder den Abtastorganen etc...

Durch die Art der Anordnung der Wälzlager 9a, 9b, 25a, 25b, 30a, 30b relativ zu den Führungsflächen 15a, 15b, 10a, 10b wird eine linienförmige Auflage zwischen Lagern und Führungsplatte erreicht, wodurch eine erhebliche Herabsetzung der Flächenpressung und dadurch eine verschleißarme Führung erhalten wird.

Im Vergleich zu einem herkömmlichen Speichersystem (Werte in Klammern) konnten mit einer Vorrichtung gemäß vorliegender Erfindung folgende Betriebsergebnisse erreicht werden.

| | | |
|---|---|---|
| 1) Positionierzeit | 1,5 m sec | (3 m sec) |
| 2) Rollwiderstand | 10 pond | (20-30 p) |
| 3) Hysterese | 1-1,5 μm | (3-5 μm) |

Zu 1) wurde eine Magnetspeicherplatte mit Spurabstand 100 μm, Spurbreite 60 μm benutzt.

Zu 2) wurde der Rollwiderstand, der einen Meßwert für die Leichtgängigkeit eines Systems darstellt, der Führungsplatte (des Kopfschlittens) bei 1 kp Andruckkraft an der Platte mittels Federwaage und bei leerlaufendem Rotor des Antriebsmotors gemessen.

Zu 3) wurde die Hysterese einer Vor- und Zurückbewegung durch Positionsvergleichmittel optischer Meßvorrichtung bestimmt. Der Meßwert ist die maximale Positionswabweichung zwischen mehreren Positionierungen auf derselben Meßstrecke.

Zusammengefaßt ergibt sich eine Verbesserung um den Faktor 2, was z. B. für eine Erhöhung der Aufzeichnungsdichte, eine Halbierung des Energiededarfs, eine Halbierung der Zugriffszeit und der Positionsfehler eine wesentliche Rolle spielt. Überraschenderweise konnte auch die Schwingungsneigung des Positioniersystems gegenüber bekannten Systemen erheblich verbessert werden.

Ein Positioniersystem für Abtastsysteme wurde vorstehend beschrieben und ist nachstehend beansprucht. Ein solches Positioniersystem ist überall dort, wie beschrieben oder modifiziert, einsetzbar, wo es auf Schnelligkeit und Genauigkeit einer Bewegungsvorrichtung ankommt, auch bei kontinuierlich wiederholten gleichen oder ähnlichen Bewegungsvorgängen.

Verwendungen sind somit generell möglich in Signalaufzeichnungs/-wiedergabesystemen, Signal-

# 0 071 083

speichersystemen, Ortspositioniersystemen, für jede Art von Signalaufzeichnung/-wiedergabe/-speicherung, z. B. von Video-, Daten-, Audio-, Steuersignalen.

**Patentansprüche**

1. Vorrichtung zum Positionieren von Gegenständen geringer Masse, insbesondere von Magnetköpfen (22) auf ausgewählte Magnetspuren von mindestens einer mit einem Antrieb kuppelbaren Magnetplatte in einem Magnetplattenspeicher, mit einer in Richtung zur Magnetplattenachse verschiebbaren Magnetkopfeinheit (22) mit mindestens einem Magnetkopf (22), die über einen Antriebsmotor (23) und eine Kraftübertragungseinrichtung (3, 7) mittels Führungsrollen (3, 9a, 9b, 30a, 30b, 25a, 25b) relativ zum Gerätechassis (4) längsverschieblich gelagert ist, wobei die Führungsrollen (3, 9a, 9b, 30a, 30b, 25a, 25b) die ebenen Längsränder (10a, 10b, 15a, 15b) einer Führungsplatte (1) umgreifen, dadurch gekennzeichnet, daß die Kraftübertragungseinrichtung (3, 7) direkt an der die Magnetkopfeinheit (22) tragenden Führungsplatte (1) angreift, so daß der Kraftvektor im wesentlichen in der Ebene liegt, in der die Führungsplatte verschiebbar gelagert ist, und daß die Führungsplatte (1), in der Höhe und in der Breite zwischen den Führungsrollen (3, 9a, 9b, 30a, 30b, 25a, 25b) geführt gelagert ist, wobei ein Teil der Führungsrollen (3, 25a, 25b, 30a, 30b) fest zum Gerätechassis (4) angeordnet ist und der andere Teil der Führungsrollen (9a und 9b) um zwei Raumachsen drehbeweglich nachgiebig angeordnet ist, wovon eine Achse parallel zur Verschieberichtung der Führungsplatte (1) und die andere senkrecht zur Verschieberichtung und quer zur Führungsplatte (1) verläuft.

2. Vorrichtung nach Anspruch 1, dadurch gekennzeichnet, daß der Antriebsmotor (23) mit einem Spulrad (3) versehen ist, an dem ein andererseits mit der Führungsplatte (1) verbundenes Antriebsband (7) befestigt ist und das Spulrad (3) gleichzeitig als stationäre Führungsrolle zur Lagerung der Führungsplatte (1) vorgesehen ist.

3. Vorrichtung nach Anspruch 1, dadurch gekennzeichnet, daß zwei stationär angeordnete Führungsrollenpaare (25a, 25b und 30a, 30b) mit Abstand zueinander vorgesehen sind und mittig dazwischen ein um zwei Raumachsen drehbeweglich nachgiebig angeordnetes Führungsrollenpaar (9a und 9b) vorgesehen ist.

4. Vorrichtung nach Anspruch 1 bis 3, dadurch gekennzeichnet, daß die Führungsrollen als Wälzlager (9a, 9b, 25a, 25b) ausgebildet sind.

5. Vorrichtung nach Anspruch 4, dadurch gekennzeichnet, daß die stationär angeordneten Wälzlagerpaare (25a, 25b) mit zur Ebene der Führungsplatte (1) im Schrägungswinkel (17), von insbesondere 45°, liegenden Führungsflächen (10a, 10b) in Kontakt stehen und die um zwei Raumachsen drehbeweglich nachgiebig angeordneten Wälzlager (9a, 9b) mit horizontalen Führungsflächen (15a, 15b) in Kontakt stehen.

6. Vorrichtung nach Anspruch 1 bis 5, dadurch gekennzeichnet, daß die ebenen Führungsflächen (10a, 10b, 15a, 15b) entlang den Längsrändern der Führungsplatte (1) mit verschleißarmen Oberflächen ausgebildet sind.

7. Vorrichtung nach einem der Ansprüche 1 bis 4 und einem der Ansprüche 5 und 6, dadurch gekennzeichnet, daß die um zwei Raumachsen drehbeweglich nachgiebig angeordneten Wälzlager (9c, 9b) auf einem Lagerbügel (6) befestigt sind, der relativ zum Gerätechassis (4) in den beiden genannten Raumrichtungen drehbeweglich nachgiebig gelagert ist.

8. Vorrichtung nach Anspruch 1, 3, 4 oder 7, dadurch gekennzeichnet, daß das um zwei Raumachsen drehbeweglich gelagerte Führungsrollenpaar bzw. Wälzlagerpaar (9a, 9b) um die Drehachse senkrecht zur Verschieberichtung und quer zur Führungsplatte (1) mittels eines Federblechs (5) drehbeweglich nachgiebig gelagert ist.

9. Vorrichtung nach Anspruch 3 und 8, dadurch gekennzeichnet, daß die für die Lagerung des mittigen Wälzlagerpaars (9a und 9b) erforderlichen beiden Drehfreiheitsgrade mittels eines in der Mitte des Federblechs (5) in Verschieberichtung angebrachten Stiftes (11) und V-förmiger Laschen (12) einerseits und der allein möglichen Schwenkbewegung (13) der Federblechs (5) andererseits realisiert sind.

10. Vorrichtung nach Anspruch 8, dadurch gekennzeichnet, daß das um zwei Raumachsen drehbeweglich gelagerte Führungsrollen- oder Wälzlagerpaar (9a und 9b) an einem um besagte Raumachsen ebenfalls drehbeweglich angeordneten Lagerbügel (6) angebracht ist, wobei die Spielfreiheit zwischen dem Federblech (5) und dem Lagerbügel (6) mittels angefederter Laschen (14) und dem in die V-förmigen Laschen (12) mit Vorspannung eingezogenen Stift (11) gewährleistet wird.

11. Vorrichtung nach Anspruch 2 und 10, dadurch gekennzeichnet, daß der Lagerbügel (6) zwischen einem Lagerträger (2) für ein stationär angeordnetes Führungsrollenpaar (25a, 25b) und dem Spulrad (3) mit dem Antriebsband (7) mittig angeordnet ist und über die Wälzkörper des drehbeweglich nachgiebig angeordneten Wälzlagerpaars (9a, 9b) mittels des vorgespannten Federblechs (5) eine Andruckkraft (in Richtung 16) auf die Führungsplatte (1) ausübt.

12. Vorrichtung nach einem der Ansprüche 8 bis 11, dadurch gekennzeichnet, daß ein stationäres Wälzlagerpaar (25a, 25b) auf einem ortsfesten Lagerträger (2) und das um zwei Raumachsen drehbeweglich nachgiebig angeordnete Führungsrollen- bzw. Wälzlagerpaar (9a, 9b) auf einem um besagte

5

Raumachsen ebenfalls drehbeweglich nachgiebig angeordneten Lagerbügel (6) befestigt ist, und daß der Lagerträger (2), der Lagerbügel (6) und das Federblech (5) gemeinsam auf einer Montagefläche (18) des Gerätechassis (4) mittels einer einzigen Schraube (19) und zwei Arretierungsstiften (20) positionierbar befestigt sind.

## Claims

1. A device for positioning objects which have a low mass, especially for positioning magnetic heads (22) over preselected magnetic tracks on at least one magnetic disk, which can be coupled to a drive, in a memory processing unit, comprising a magnetic head assembly (22) with at least one magnetic head (22), which assembly is capable of being moved toward and away from the axis of rotation of the magnetic disk, and is so mounted between guide rolls (3, 9a, 9b, 30a, 30b, 25a, 25b) that it can be displaced by a drive motor (23) and a power-transmission mechanism (3, 7) longitudinally with respect to the chassis (4) of the unit, the guide rolls (3, 9a, 9b, 30a, 30b, 25a, 25b) engaging the flat longitudinal guide surfaces (10a, 10b, 15a, 15b) of a carriage (1), wherein the power-transmission mechanism (3, 7) acts directly on the carriage (1) bearing the magnetic head assembly (22), so that the force vector is essentially located in the plane in which the carriage is displaceably mounted, and wherein the carriage (1) is guided in the vertical and horizontal directions by the guide rolls (3, 9a, 9b, 30a, 30b, 25a, 25b), some of the guide rolls (3, 25a, 25b, 30a, 30b) being fixedly mounted on the chassis (4) and the other guide rolls (9a and 9b) being resiliently mounted for pivotal movement about two axes, one axis running parallel to the direction of displacement of the carriage (1) and the other running at right angles to the direction of displacement and transverse to the carriage (1).

2. A device as claimed in claim 1, wherein the drive motor (23) is provided with a cylindrical member (3) to which a drive band (7), the ends of which are connected to the carriage (1), is fastened, and the cylindrical member (3) simultaneously serves as a fixed guide roll for supporting the carriage.

3. A device as claimed in claim 1, wherein two spaced pairs of fixed guide rolls (25a, 25b and 30a, 30b) are provided, and a pair of guide rolls (9a and 9b), resiliently mounted for pivotal movement about two axes, is arranged centrally between them.

4. A device as claimed in claims 1 to 3, wherein the guide rolls are in the form of anti-friction bearings (9a, 9b, 25a, 25b).

5. A device as claimed in claim 4, wherein the fixed pair of anti-friction bearings (25a, 25b) are in contact with guide surfaces (10a, 10b) which are inclined at an angle (17), especially an angle of 45°, to the plane of the carriage (1), and the anti-friction bearings (9a, 9b), resiliently mounted for pivotal movement about two axes, are in contact with horizontal guide surfaces (15a, 15b).

6. A device as claimed in claims 1 to 5, wherein the flat guide surfaces (10a, 10b, 15a, 15b) on the longitudinal edges of the carriage (1) are provided with low-wear surfaces.

7. A device as claimed in any of claims 1 to 4 and claim 5 or 6, wherein the anti-friction bearings (9a, 9b) resiliently mounted for pivotal movement about two axes, are fastened to a bow-shaped member (6) which is resiliently mounted for pivotal movement, relative to the chassis (4), in the said two directions.

8. A device as claimed in claim 1, 3, 4 or 7, wherein the pair of guide rolls or anti-friction bearings (9a, 9b) mounted for pivotal movement about two axes is resiliently mounted on a flexure member (5) for movement about the axis of rotation running at right angles to the direction of displacement and transverse to the carriage (1).

9. A device as claimed in claims 3 and 8, wherein the necessary pivotal movement of the central pair of anti-friction bearings (9a and 9b) in two directions is achieved, on the one hand, by means of a pin (11), arranged in the middle of the flexure member (5) parallel to the direction of displacement, and tabs (12) which together form a V, and, on the other hand, by means of the flexure member (5) which can only pivot in one direction (13).

10. A device as claimed in claim 8, wherein the pair of guide rolls or anti-friction bearings (9a, 9b) mounted for pivotal movement about two axes is arranged on a bow-shaped member (6) also mounted for pivotal movement about the said axes, freedom from play between the flexure member (5) and the bow-shaped member (6) being ensured by means of sprung tabs (14) and the pin (11) which is pulled into the V formed by the tabs (12) by the prestressing of the flexure member.

11. A device as claimed in claims 2 and 10, wherein the bow-shaped member (6) is located centrally between a bearing carrier (2) for a fixed pair of guide rolls (25a, 25b) and the cylindrical member (3) bearing the drive band (7), and exerts a force (in direction 16) — by virtue of the prestressed flexure member (5) — on the carriage (1) via the outer races of the pair of anti-friction bearings (9a, 9b) resiliently mounted for pivotal movement about two axes.

12. A device as claimed in any of claims 8 to 11, wherein a fixed pair of anti-friction bearings (25a, 25b) is fastened to a stationary bearing carrier (2), and the pair of guide rolls or anti-friction bearings (9a, 9b) mounted for pivotal movement about two axes is fastened to a bow-shaped member (6) also mounted for pivotal movement about the said axes, and wherein the bearing carrier (2), the bow-shaped member (6) and the flexure member (5) can be positioned on, and are jointly fastened to, a mounting surface (18) on the chassis (4) of the memory processing unit by means of a single screw (19) and two locking pegs

**0 071 083**

(20).

**Revendications**

1. Dispositif de positionnement d'objets de faible masse, en particulier de têtes magnétiques (22), sur des pistes magnétiques sélectionnées d'au moins un disque magnétique accouplable à un entraînement, dans une mémoire à disques magnétiques, comprenant un ensemble de têtes magnétiques (22) déplaçable en direction de l'axe des disques magnétiques, comportant au moins une tête magnétique (22) et qui est monté déplaçable longitudinalement par rapport au châssis de l'appareil (4), grâce à un moteur d'entraînement (23) et des moyens de transmission de force (3, 7) et par l'intermédiaire de galets de guidage (3, 9a, 9b, 30a, 30b, 25a, 25b) lesdits galets de guidage enserrant les bords longitudinaux plans (10a, 10b, 15a, 15b) d'une plaque de guidage (1), caractérisé par le fait que les moyens de transmission de force (3, 7) attaquent directement la plaque de guidage (1) supportant l'ensemble des têtes magnétiques (22) de telle sorte que le vecteur force se trouve sensiblement dans le plan dans lequel la plaque de guidage est déplaçable et la plaque de guidage (1) est montée guidée en hauteur et en largeur entre les galets de guidage (3, 9a, 9b, 30a, 30b, 25a, 25b), une partie des galets de guidage (3, 25a, 25b, 30a, 30b) étant montée fixe par rapport au châssis de l'appareil (4) et l'autre partie des galets de guidage (9a et 9b) étant montée flexible, pivotante autour de deux axes, dont l'un est parallèle à la direction de déplacement de la plaque de guidage (1) et l'autre est perpendiculaire à la direction de déplacement et transversal par rapport à la plaque de guidage (1).

2. Dispositif selon la revendication 1, caractérisé par le fait que le moteur d'entraînement (23) est muni d'une roue de bobinoir (3) sur laquelle est fixée une bande d'entraînement (7) liée par ailleurs à la plaque de guidage (1) et la roue de bobinoir (3) est prévue en même temps comme galet de guidage fixe pour supporter la plaque de guidage (1).

3. Dispositif selon la revendication 1, caractérisé par le fait que sont prévues deux paires de galets de guidage (25a, 25b et 30a, 30b) montées fixes en position écartées l'une de l'autre et entre lesquelles est prévue une paire de galets de guidage (9a et 9b) montée flexible et pivotante autour de deux axes.

4. Dispositif selon les revendications 1 à 3, caractérisé par le fait que les galets de guidage sont réalisés sous forme de roulements (9a, 9b, 25a, 25b).

5. Dispositif selon la revendication 4, caractérisé par le fait que les deux roulements fixes en position (25a, 25b) sont en contact avec des surfaces de guidage (10a, 10b) disposées à angle aigu (17), en particulier à 45°, par rapport au plan de la plaque de guidage (1) et les roulements (9a, 9b), flexibles et pivotants autour de deux axes, sont en contact avec des surfaces de guidage (15a, 15b) horizontales.

6. Dispositif selon les revendications 1 à 5, caractérisé par le fait que les surfaces de guidage planes (10a, 10b, 15a, 15b) comportent, le long des bords longitudinaux de la plaque de guidage (1), des surfaces à faible usure.

7. Dispositif selon l'une des revendications 1 à 4, et l'une des revendications 5 et 6, caractérisé par le fait que les roulements (9a, 9b), flexibles et pivotants autour de deux arbres sont fixés sur un étrier support (6) qui est monté flexible et pivotant selon les deux directions d'axes indiquées, par rapport au châssis de l'appareil (4).

8. Dispositif selon la revendication 1, 3, 4 ou 7, caractérisé par le fait que la paire de galets de guidage ou de roulements (9a, 9b) montée pivotante autour de deux axes est montée flexible et pivotante, autour de l'axe de pivotement, perpendiculairement à la direction de déplacement et transversalement à la plaque de guidage (1), au moyen d'une tôle élastique (5).

9. Dispositif selon la revendication 3 et 8, caractérisé par le fait que les deux degrés de liberté en rotation nécessaires pour le montage de la paire médiane de roulements (9a et 9b) sont obtenus au moyen, d'une part, d'une broche (11) disposée en direction du déplacement, au milieu de la tôle élastique (5), et de languettes (12), en forme de V, et d'autre part, du seul mouvement de pivotement possible (13) de la tôle élastique (5).

10. Dispositif selon la revendication 8, caractérisé par le fait que la paire de galets de guidage ou roulements (9a, 9b) montée pivotante autour de deux axes est montée sur un étrier support (6) monté pivotant également autour desdits axes, la liberté de jeu entre la tôle élastique (5) et l'étrier (6) étant assurée par des languettes (14) montées élastiquement et la broche (11) enfoncée avec précontrainte dans les languettes en V (12).

11. Dispositif selon les revendications 2 et 10, caractérisé par le fait que l'étrier (6) est disposé centralement, entre un support (2) d'une paire de galets de guidage, montée fixe (25a, 25b) et la roue de bobinoir (3) avec la bande d'entraînement (7), et il exerce, par l'intermédiaire des corps cylindriques de la paire de galets (9a, 9b) flexible et pivotante et grâce à la tôle élastique précontrainte (5), une force de pressage (en direction 16) sur la plaque de guidage (1).

12. Dispositif selon l'une des revendications 8 à 11, caractérisé par le fait qu'une paire de roulements, de position fixe (25a, 25b), est montée sur un support (2) fixe en position et la paire de roulements ou galets de guidage (9a, 9b) flexible et pivotant autour de deux axes est fixée sur un étrier (6) monté également flexible et pivotant autour desdits axes, et le support (2), l'étrier (6) et la tôle élastique (5) sont fixés positionables en commun sur une surface de montage (18) du châssis de l'appareil (4) au moyen d'une seule vis (19) et de deux chevilles d'arrêt (20).

7

FIG.1

0 071 083

FIG.2

0 071 083

FIG.3

FIG.4